# EUROPÄISCHE PATENTSCHRIFT

(11) **EP 3 515 388 B1**
(45) Veröffentlichungstag und Bekanntmachung des Hinweises auf die Patenterteilung: **04.05.2022**
(21) Anmeldenummer: 17762132.3
(22) Anmeldetag: 07.09.2017
(51) Int. Cl.: A61G 5/04

(54) **CHASSIS FÜR EINE MOBILITÄTSHILFE UND FÜR EINEN ELEKTROROLLSTUHL**
CHASSIS FOR A MOBILITY AID AND FOR AN ELECTRIC WHEELCHAIR
CHÂSSIS POUR UN DISPOSITIF D'AIDE À LA MOBILITÉ ET POUR UN FAUTEUIL ROULANT ÉLECTRIQUE

(30) Priorität: 23.09.2016 DE 102016118018
(43) Veröffentlichungstag der Anmeldung: 31.07.2019
(73) Patentinhaber: Otto Bock Mobility Solutions GmbH, 07426 Königsee-Rottenbach (DE)
(72) Erfinder: KÖNIG, Johannes, 99867 Gotha (DE)
(74) Vertreter: Gramm, Lins & Partner Patent- und Rechtsanwälte PartGmbB
(86) Internationale Anmeldenummer: PCT/EP2017/072487
(87) Internationale Veröffentlichungsnummer: WO 2018/054693

(56) Entgegenhaltungen:
- EP-A1- 0 776 647
- EP-A1- 2 143 407
- EP-A2- 1 279 392
- EP-A2- 1 522 293
- WO-A2-00/25718

## Beschreibung

Die Erfindung betrifft ein Chassis für eine Mobilitätshilfe, bestehend aus mindestens, zwei Seitenwänden und wenigstens einem Verbindungselement der beiden Seitenwände. Insbesondere betrifft die Erfindung ein Chassis für einen Elektrorollstuhl, das mindestens zwei Seitenwände und zwei Stirnwände aufweist.

Mobilitätshilfen im Sinne der vorliegenden Erfindung sind orthopädische Vorrichtungen für Personen mit eingeschränkter Mobilität. Mobilitätshilfen können beispielsweise Rollstühle, Laufhilfen oder Rollatoren oder andere die Mobilität erhöhende Vorrichtungen und Geräte sein. Derartige Vorrichtungen und insbesondere Rollstühle sind aus dem Stand der Technik seit langem bekannt.

Ein solches Chassis ist beispielsweise aus der DE 10 2009 051 118 B4 bekannt. Elektrorollstühle gibt es mit drei Antriebsarten, nämlich Frontantrieb, Heckantrieb und Mittelradantrieb. Die Auswahl der Antriebsart eines Elektrorollstuhls ist wichtig. Wendigkeit, Spurstabilität und Fahrverhalten im Außenbereich werden von der Antriebsart beeinflusst. Je nach Einsatz, Ort und Nutzung des Elektrorollstuhls wird die passende Antriebsart ausgewählt.

Mit Frontantrieb ausgerüstete Rollstühle verfügen über kompakte Abmaße und haben ihren Schwerpunkt zwischen Antriebsachse und Lenkrad. Der Drehpunkt des Rollstuhles befindet sich vor dem Drehpunkt des Benutzers, was es erfordert, dass beim Wenden des Rollstuhls auf das Ausschwenken des Hecks geachtet werden muss. Der Wendekreis ist klein, weil durch die Lage des Drehpunktes der Rollstuhl sich auch im Bogen drehen kann. Durch die höhere Traktion auf der Antriebsachse wird eine Bergabfahrt begünstigt.

Auch bei Elektrorollstühlen ist die klassische Antriebsart der Heckantrieb. Diese Rollstühle weisen sehr gute Fahreigenschaften, auch bei hohen Geschwindigkeiten, auf.

Der Drehpunkt des Rollstuhls befindet sich beim Heckantrieb hinter dem Drehpunkt des Benutzers, was zur Folge hat, dass der Elektrorollstuhl einen großen Wendekreis hat. Auch beim Heckantrieb dreht sich der Rollstuhl im Bogen. Mit dem Heckantrieb wird die Bergauffahrt begünstigt, weil durch die Schwerpunktverlagerung die Traktion auf der Hinterachse erhöht wird.

Elektrorollstühle mit Mittelantrieb verfügen über sechs einzeln aufgehängte Räder, wobei alle sechs Räder permanenten Kontakt zum Untergrund haben. Diese Eigenschaft hält den Rollstuhl stets in einer ruhigen und stabilen Position, was sich auf den Benutzer überträgt und die Entstehung von Spasmen verhindert. Der Drehpunkt des Rollstuhls fällt mit dem Drehpunkt des Benutzers zusammen. Durch den über der Antriebsachse liegenden Schwerpunkt wird eine hohe Stabilität erreicht, was ein intuitives Fahren gestattet und somit dem Benutzer mit höherem Invaliditätsgrad zugutekommt. Bei Bergauf- und Bergabfahrt verändert sich der Schwerpunkt nur minimal, was zu einem gleichbleibenden Vortrieb führt. Abschüssige Wegstrecken und Rampen können problemlos auch seitlich befahren werden.

Die unterschiedlichen Antriebsarten erfordern unterschiedliche Chassisausgestaltungen, um die Antriebsräder und die Motoren am Chassis anzubinden. Dadurch steigen der Fertigungsaufwand und die Kosten für die Lagerhaltung, zudem wird die Produktvielfalt eingeschränkt.

Die WO 00/25718 A2 offenbart Elektrorollstühle, deren Motoren mit einem Außenstator und einem Innenrotor ausgerüstet sind, in dem die Achsen der Antriebsräder angeordnet und ohne Zwischengetriebe mit dem Rotor zur synchronen Drehung der Antriebsräder und des Rotors verbunden sind. Die Motoren sind vorzugsweise bürstenlos und weisen eine elektromechanische Bremse innerhalb des Motorgehäuses auf, die direkt mit der Ausgangswelle des Motors gekoppelt ist, um direkt auf den Rotor zu wirken. Diese Motoren sind geeignet, in Rollstühlen mit Frontantrieb, mit Heckantrieb oder mit Mittelantrieb verwendet zu werden.

Hiervon ausgehend liegt der Erfindung die Aufgabe zugrunde, das gattungsgemäße Chassis für eine Mobilitätshilfe zu verbessern und außerdem auch das gattungsgemäße Chassis eines Elektrorollstuhls so fortzubilden, dass es für mindestens zwei der drei Antriebsarten eingesetzt werden kann.

Die Lösung der Aufgabe erfolgt allgemein für eine Mobilitätshilfe durch ein Chassis mit folgenden Merkmalen:
a) jede Seitenwand weist mehrere Positionierungshilfen auf,
b) je einen Bügel, der in mindestens zwei unterschiedlichen Anordnungen mit je einer Seitenwand verbindbar ist,
c) eine Antriebseinheit, die mit dem Bügel verbunden ist.

Die Lösung der Aufgabe für einen Elektrorollstuhl erfolgt durch ein Chassis mit folgenden Merkmalen:
a) jede Seitenwand weist ein aus einer Mehrzahl von Bohrungen bestehendes Lochbild auf,
b) je ein mit einem Achsstummel versehener Bügel ist in mindestens drei unterschiedlichen Anordnungen mit einer der Seitenwände verbindbar,
c) die Anordnung der Bügel an den Seitenwänden bestimmt die Antriebsart des Rollstuhls.

Durch diese Ausgestaltung ist ein Chassis für mindestens zwei der drei Antriebsarten möglich. Die beiden an den Seitenwänden anbringbaren Bügel sind identisch ausgebildet, auch das Lochbild der Seitenwände ist (spiegelbildlich) identisch. Die Herstellkosten und die Lagerhaltung werden dadurch deutlich reduziert und die Umstellung der Fertigung auf eine andere Antriebsart sehr erleichtert.

Vorteilhaft ist es, wenn zusätzlich zu den Seitenwänden und den Stirnwänden das Chassis auch noch mindestens einen Boden aufweist.

Wenn jeder Bügel in mindestens drei unterschiedlichen Anordnungen mit je einer Seitenwand verbindbar ist, wird sichergestellt, dass das Chassis für alle drei Antriebsarten verwendbar ist.

Vorzugsweise ist am Bügel ein Achsstummel befestigt, der zur Aufnahme der Antriebseinheit dient. Insbesondere vorzugsweise ist der Achsstummel waagerecht vom Chassis angeordnet, also parallel zum Boden (Fahrbahn) verlaufend.

Durch eine symmetrische Anordnung der Bügel am Chassis kann ein gestalteter Bügel für beide Seitenwände verwendet werden, wodurch die Bauteilvielfalt reduziert ist.

Die Positionierungshilfen sind vorzugsweise Löcher oder Bohrungen für Befestigungsschrauben oder Nieten, für Erhöhungen oder Vertiefungen oder Schienen.

Vorzugsweise ist jeder Bügel durch Schrauben oder Nieten oder Kleben oder Schweißen mit der Seitenwand verbunden.

Für einen Elektrorollstuhl ist der Achsstummel vorzugsweise zur Aufnahme einer aus mindestens einem Rad und einem das Rad antreibenden Elektromotor bestehenden Antriebseinheit ausgebildet. Wenn die Antriebseinheit über eine Feder-Dämpfer-Einheit an dem Bügel anlenkbar ist, kann diese als eine vormontierte Einheit am Chassis befestigt werden und erfüllt ohne weitere Montage ihre Funktion. Das Rad ist vorzugsweise nach Befestigung der Antriebseinheit am Bügel/Chassis auf diese aufsetzbar. Dadurch wird die Montage vereinfacht.

Der Bügel ist vorzugsweise L-förmig mit einem kurzen und einem langen Schenkel ausgebildet. Insbesondere vorzugsweise besteht er aus einem Flachstahl.

Vorteilhaft ist es, wenn der Achsstummel an dem kurzen Schenkel angeordnet ist und insbesondere vorteilhaft ist dann, wenn an dem langen Schenkel ein Zapfen zur Befestigung einer Feder/Dämpfer-Einheit angeordnet ist. Werden die Bügel bezogen auf die Fahrtrichtung vorne an den Seitenwänden befestigt, wird das Chassis für einen Rollstuhl mit Frontantrieb verwendet. Wenn die Bügel bezogen auf die Fahrtrichtung hinten an den Seitenwänden befestigt werden, wird das Chassis für den Heckantrieb vorbereitet. In der Befestigung in der mittleren Position kann der Mittelradantrieb realisiert werden. Gegebenenfalls ist es notwendig, in diesem Fall die Bügel zu vertauschen, also den für die (in Fahrtrichtung betrachtet) rechte Seitenwand vorgesehenen Bügel an der linken Seitenwand zu befestigen und umgekehrt. Vorzugsweise ist jeder Bügel an mindestens drei Punkten an der Seitenwand befestigbar. Dies sind vorzugsweise der kurze Schenkel, der lange Schenkel und der Eckbereich, in dem die beiden Schenkel aneinander stoßen. Vorteilhaft ist es hierzu, wenn das Lochbild einer Seitenwand mindestens neun Bohrungen umfasst. Bevorzugt werden die beiden Schenkel an jeweils drei Punkten mit den Seitenwänden verschraubt.

Das Chassis ist bevorzugt kastenförmig ausgebildet und kann deshalb vorteilhafterweise zwischen den Stirnwänden und den Seitenwänden einen Akkumulator für die Energieversorgung der beiden Elektromotoren aufnehmen.

Mit Hilfe einer Zeichnung werden Ausführungsbeispiele der Erfindung anhand eines Elektrorollstuhls nachfolgend näher erläutert. Es zeigen:

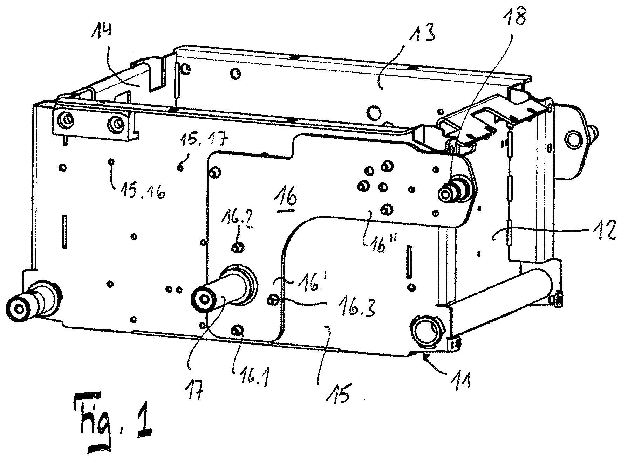

- Figur 1 -: eine perspektivische Darstellung des Chassis für den Frontantrieb;
- Figur 2 -: eine perspektivische Darstellung des Chassis für den Mittenantrieb;
- Figur 3 -: eine perspektivische Darstellung des Chassis für den Heckantrieb;

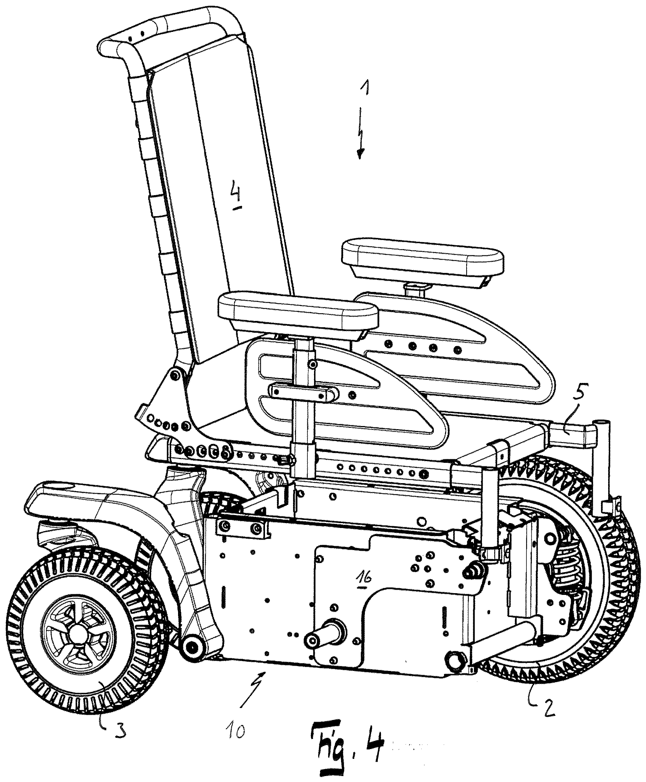

- Figur 4 -: eine perspektivische Darstellung eines frontgetriebenen Rollstuhls;

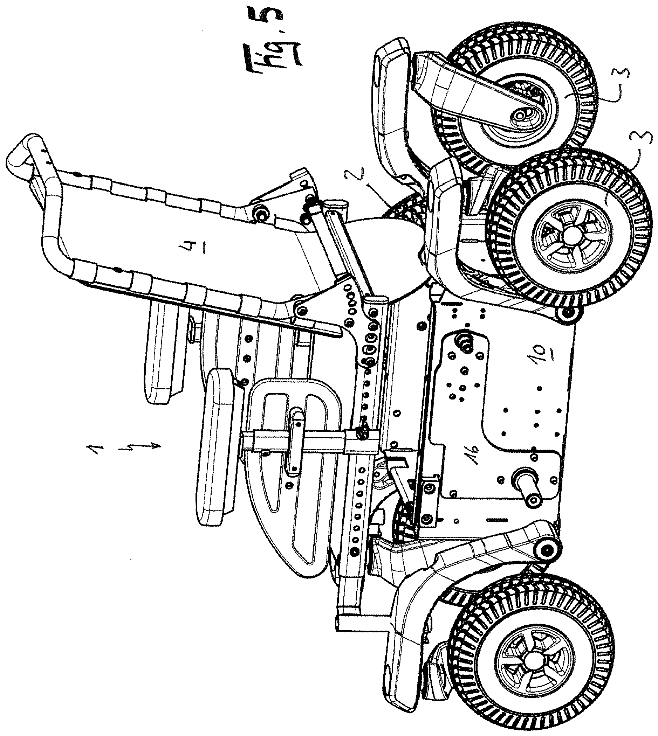

- Figur 5 -: eine perspektivische Darstellung eines mittenangetriebenen Rollstuhls;

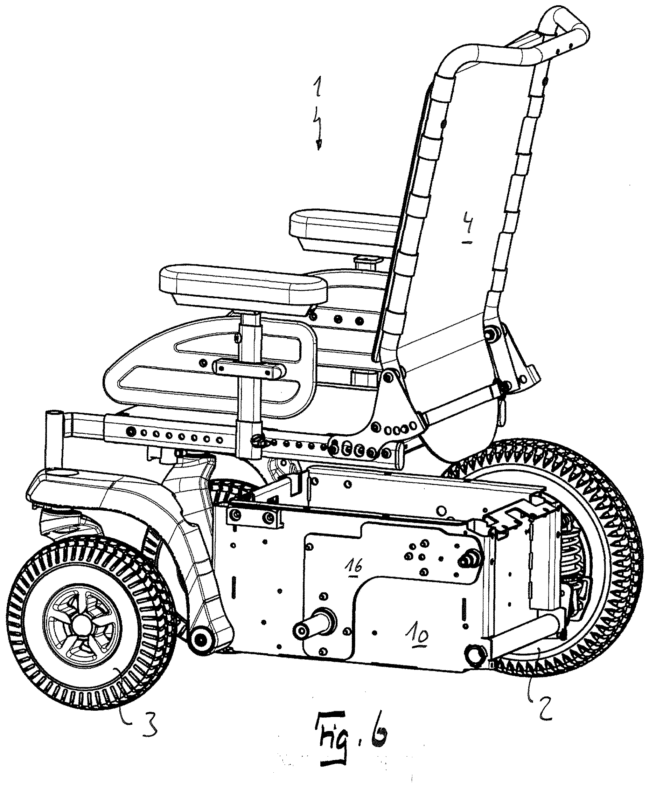

- Figur 6 -: eine perspektivische Darstellung eines heckangetrieben Rollstuhls;

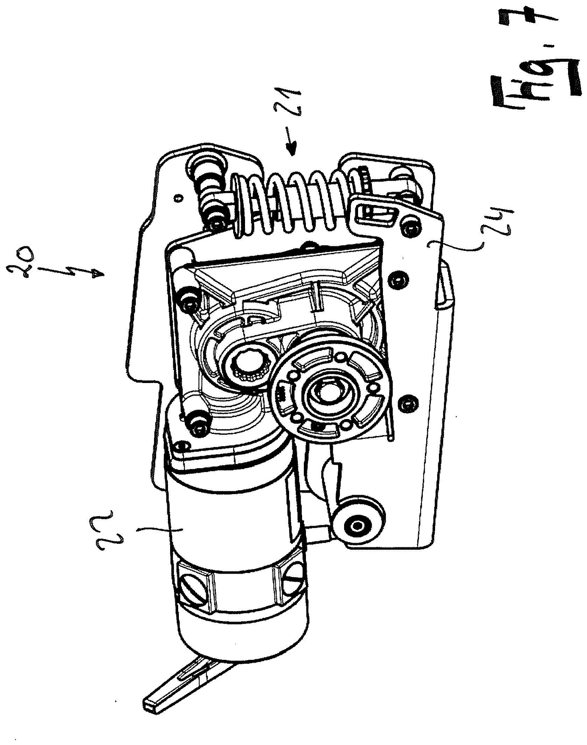

- Figur 7 -: eine perspektivische Darstellung einer Antriebseinheit;

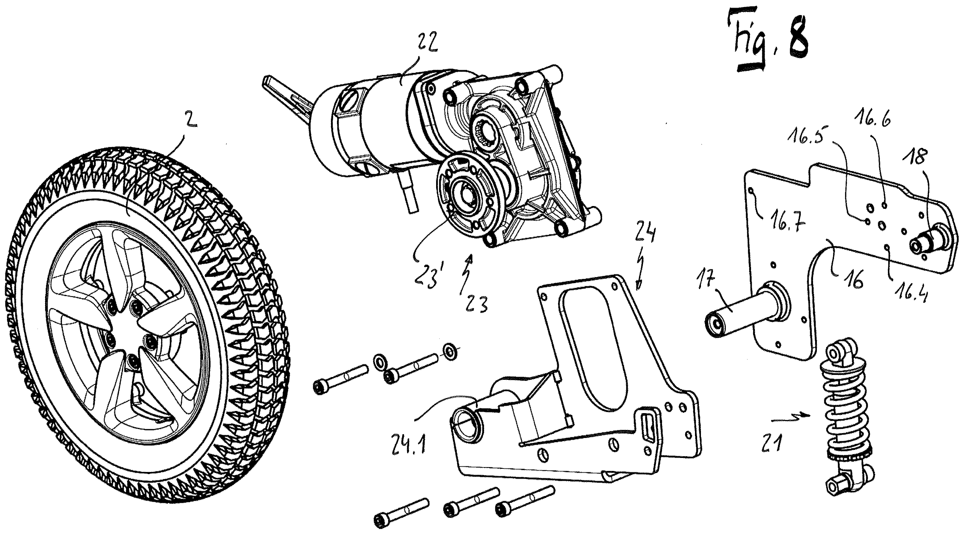

- Figur 8 -: eine Explosionsdarstellung der Antriebseinheit nach Figur 7 mit Antriebsrad;

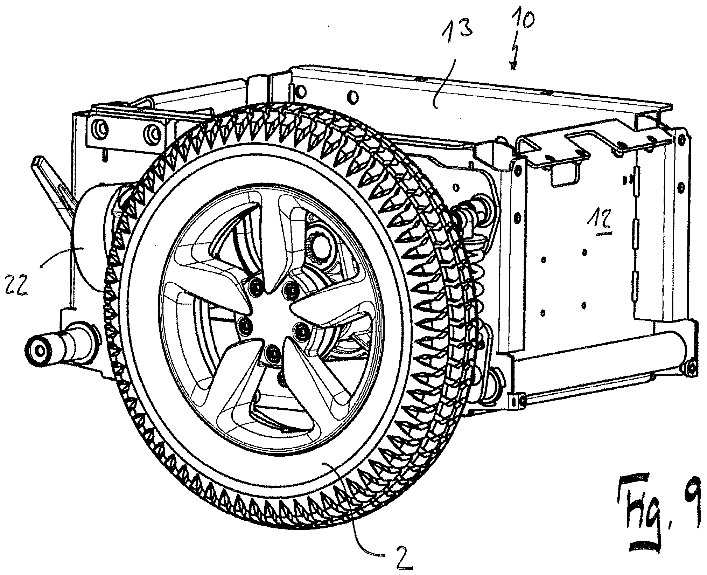

- Figur 9 -: eine perspektivische Darstellung des Chassis mit angebauter Antriebseinheit.

Wie bereits erläutert sind Mobilitätshilfen im Sinne der Erfindung allgemein orthopädische Vorrichtungen für Personen mit eingeschränkter Mobilität. Sie können beispielsweise Rollstühle, Laufhilfen oder Rollatoren, Buggys oder andere die Mobilität erhöhende Vorrichtungen und Geräte sein. Insbesondere ein Elektrorollstuhl wird, wie eingangs bereits dargelegt in drei verschiedenen Antriebsvariationen angeboten und er bietet sich deshalb besonders für die Anwendung der Erfindung an, sodass nachfolgend diese anhand eines Elektrorollstuhles 1 beschrieben wird.

Der Elektrorollstuhl 1 besteht im Wesentlichen aus einem Chassis 10, einem an dem Chassis 10 angebrachten Sitzrahmen 5 mit Rückenlehne 4 zur Aufnahme eines Sitzes sowie Antriebsrädern 2 und Lenkrädern 3.

Das Chassis 10 ist kastenförmig ausgebildet und wird durch einen Boden 11, sich gegenüberliegende Stirnwände 12, 14 und sich gegenüberliegende Seitenwände 13, 15 gebildet. An den angrenzenden Seitenkanten können die Wände 12, 13, 14, 15 und der Boden 11 miteinander verschweißt sein. Mit jeder Seitenwand 13, 15 ist ein L-förmiger Bügel 16 mit einem kurzen Schenkel 16^{I} und einem langen Schenkel 16^{II} verschraubt. Der Bügel 16 kann in drei unterschiedlichen Anordnungen angeschraubt werden. Die Anordnung des Bügels 16 bestimmt die Antriebsart.

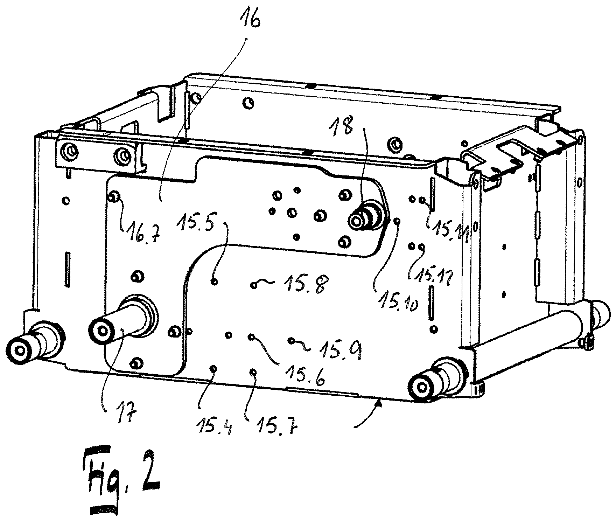

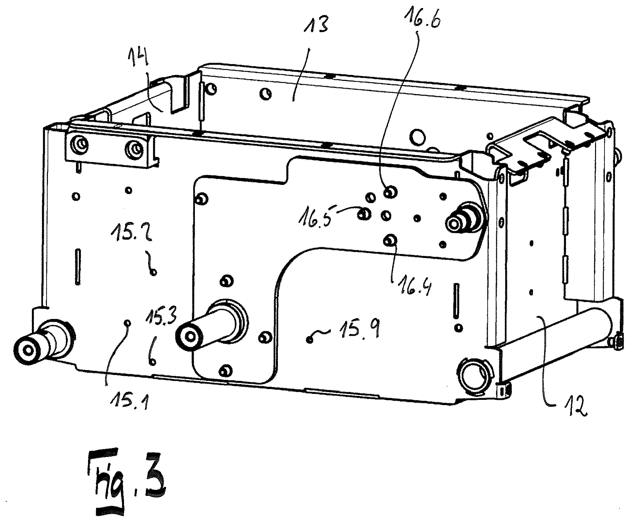

Um die unterschiedlichen Anordnungen realisieren zu können, weist jede Seitenwand 13, 15 ein Lochbild auf, das eine Mehrzahl von Bohrungen 15.1, 15.2, 15.3; 15.4, 15.5, 15.6; 15.7, 15.8, 15.9; 15.10, 15.11, 15.12 umfasst. Das Lochbild ist Figuren 2 und 3 entnehmbar, wobei die Bohrungen 15.10, 15.11, 15.12 als Satz dreifach vorhanden sind. In den Figuren werden durch den langen Schenkel 16" des Bügels 16 zwei Sätze verdeckt. Der kurze Schenkel 16^{I} ist mit Bohrungen 16.1, 16.2, 16.3 versehen, die zu dem Lochbild mit den Bohrungen 15.1, 15.2, 15.3; 15.4, 15.5, 15.6 und 15.7, 15.8, 15.9 passen. Der lange Schenkel 16" ist mit Bohrungen 16.4, 16.5, 16.6 versehen, die in ihrer Anordnung zu den Bohrungen 15.10, 15.11, 15.12 des Lochbildes passen. Eine weitere Verbindungsstelle ist außen in dem Bereich vorgesehen, wo sich der kurze Schenkel 16^{I} und der lange Schenkel 16" treffen. Entsprechend sind in den Seitenwänden 13, 15 hier auch noch Bohrungen 15.16, 15.17 vorgesehen, die in ihrer Anordnung im Lochbild zu der Bohrung 16.7 in der jeweiligen Anordnung des Bügels 16 auf der Seitenwand 13, 15 passen.

Der Bügel 16 weist an seinem kurzen Schenkel 16^{I} einen Achsstummel 17 oder Achsbolzen und an seinem langen Schenkel 16" einen Zapfen 18 auf. Der Achsstummel 17 dient zur Aufnahme einer Antriebseinheit 20, die über eine Feder-Dämpfereinheit 21 an dem Zapfen 18 angelenkt ist. Die Antriebseinheit 20 umfasst ein Antriebsrad 2, einen Antriebsmotor 22 und eine Getriebeeinheit 23 mit einem Flansch 23^{I} zur Aufnahme des Antriebsrades 2 sowie einen Aufnahmerahmen 24, der mit einer Buchse 14.1 versehen ist. Antriebsmotor 22 und Getriebeeinheit 23 werden mit dem Aufnahmerahmen 24 verschraubt. Die Feder-Dämpfer-Einheit 21 wird an ihrem unteren Ende mit dem Aufnahmerahmen 24 verbunden, der Aufnahmerahmen 24 dann mit seiner Buchse 24.1 auf den Achsstummel 17 aufgesteckt und die Feder-Dämpfer-Einheit 21 mit ihrem oberen Ende mit dem Zapfen 18 verbunden. Abschließend wird das Rad 2 auf den Flansch 23^{I} aufgesetzt, sodass der Antrieb festgelegt ist.

Durch die kastenförmige Ausgestaltung des Chassis 10 ist es möglich, zwischen die Seitenwände 13, 15 und die Stirnwände 12, 14 einen hier nicht dargestellten Akkumulator für die Energieversorgung der Elektromotoren 22 aufzunehmen, der sich an dem Boden 11 abstützt und an diesem gegen Verrutschen gesichert ist.

### Bezugszeichenliste

- 1: Rollstuhl
- 2: Antriebsrad
- 3: Lenkrad
- 4: Rückenlehne
- 5: Sitzrahmen

- 10: Chassis
- 11: Boden
- 12: Stirnwand
- 13: Seitenwand
- 14: Stirnwand

- 14.1: Buchse
- 15: Seitenwand
- 15.1: Bohrung
- 15.2: Bohrung
- 15.3: Bohrung

- 15.4: Bohrung
- 15.5: Bohrung
- 15.6: Bohrung
- 15.7: Bohrung
- 15.8: Bohrung

- 15.9: Bohrung
- 15.10: Bohrung
- 15.11: Bohrung
- 15.12: Bohrung
- 15.13: Bohrung
- 15.14: Bohrung
- 15.15: Bohrung
- 15.16: Bohrung
- 15.17: Bohrung
- 16: Bügel

- 16^{I}: kurzer Schenkel
- 16": langer Schenkel
- 16.1: Bohrung
- 16.2: Bohrung
- 16.3: Bohrung

- 16.4: Bohrung
- 16.5: Bohrung
- 16.6: Bohrung
- 16.7: Bohrung
- 17: Achsstummel

- 18: Zapfen
- 20: Antriebseinheit
- 21: Feder-Dämpfer-Einheit
- 22: Elektromotor
- 23: Getriebe

- 23^{I}: Zapfen
- 24: Rahmen
- 24.1: Buchse

## Patentansprüche

1. Chassis für eine Mobilitätshilfe (1), das für mindestens zwei der möglichen Antriebsarten Frontantrieb, Heckantrieb oder Mittelantrieb einsetzbar ist, bestehend aus mindestens zwei Seitenwänden (13, 15) und wenigstens einem Verbindungselement (12, 14) der beiden Seitenwände (13, 15) mit folgenden Merkmalen:
a) jede Seitenwand (13, 15) weist mehrere Positionierungshilfen auf,
b) je einen Bügel (16), der in mindestens zwei unterschiedlichen Anordnungen mit je einer Seitenwand (13, 15) verbindbar ist,
c) eine Antriebseinheit (20), die mit dem Bügel (16) verbunden ist, wobei
d) die Anordnung der Bügel (16) an der Seitenwand (13, 15) die Antriebsart der Mobilitätshilfe (1) bestimmt.

2. Chassis nach Anspruch 1, **dadurch gekennzeichnet, dass** am Bügel (16) ein Achsstummel (17) befestigt ist zur Aufnahme der Antriebseinheit (20), insbesondere der Achsstummel (17) waagerecht vom Chassis (10) angeordnet ist.

3. Chassis nach Anspruch 1, **dadurch gekennzeichnet, dass** die Bügel (16) symmetrisch am Chassis (10) angeordnet sind.

4. Chassis nach Anspruch 1, **dadurch gekennzeichnet, dass** die Positionierungshilfen Löcher (15.1, 15.2, 15.3, 15.16; 15.4, 15.5, 15.6, 15.17; 15.7, 15.8, 15.9; 15.10, 15.11, 15.12) für Befestigungsschrauben oder Niete sein können, oder Erhöhungen oder Vertiefungen oder Schienen.

5. Chassis nach Anspruch 1, **dadurch gekennzeichnet, dass** der Bügel (16) durch Schrauben oder Nieten oder Kleben oder Schweißen mit der Seitenwand (13, 15) verbunden ist.

6. Chassis nach einem der vorstehenden Ansprüche, **dadurch gekennzeichnet, dass** das Chassis mindestens einen Boden (11) aufweist.

7. Chassis nach einem der vorstehenden Ansprüche, **dadurch gekennzeichnet, dass** jeder Bügel (16) in mindestens drei unterschiedlichen Anordnungen mit der Seitenwand (13, 15) verbindbar ist.

8. Chassis für einen Elektrorollstuhl (1), das für mindestens zwei der möglichen Antriebsarten Frontantrieb, Heckantrieb oder Mittelantrieb einsetzbar ist, bestehend aus mindestens zwei Seitenwänden (13, 15) und zwei Stirnwänden (12, 14) mit folgenden Merkmalen:
a) jede Seitenwand (13, 15) weist ein aus einer Mehrzahl von Bohrungen (15.1, 15.2, 15.3, 15.16; 15.4, 15.5, 15.6, 15.17; 15.7, 15.8, 15.9; 15.10, 15.11, 15.12) bestehendes Lochbild auf,
b) je ein mit einem Achsstummel (17) versehener Bügel (16) ist in mindestens zwei unterschiedlichen Anordnungen mit je einer Seitenwand (13, 15) verbindbar, wobei
c) die Anordnung der Bügel (16) an der Seitenwand (13, 15) die Antriebsart des Rollstuhls (1) bestimmt.

9. Chassis nach Anspruch 8, **dadurch gekennzeichnet, dass** das Chassis mindestens einen Boden (11) aufweist.

10. Chassis nach Anspruch 8 oder 9, **dadurch gekennzeichnet, dass** jeder Bügel (16) in mindestens drei unterschiedlichen Anordnungen mit der Seitenwand (13, 15) verbindbar ist.

11. Chassis nach einem der Ansprüche 8 bis 10, **dadurch gekennzeichnet, dass** der Achsstummel (17) zur Aufnahme einer aus mindestens einem Antriebsrad (2) und einem das Antriebsrad (2) antreibenden Elektromotor (22) bestehenden Antriebseinheit (20) ausgebildet ist.

12. Chassis nach Anspruch 11, **dadurch gekennzeichnet, dass** die Antriebseinheit (20) über eine Feder-Dämpfer-Einheit (21) an dem Bügel (16) anlenkbar ist.

13. Chassis nach einem der Ansprüche 8 bis 12, **dadurch gekennzeichnet, dass** der Bügel (16) L-förmig mit einem kurzen (16^{I}) und einem langen Schenkel (16") ausgebildet ist.

14. Chassis nach Anspruch 13, **dadurch gekennzeichnet, dass** der Achsstummel (17) an dem kurzen Schenkel (16^{I}) angeordnet ist und/oder an dem langen Schenkel (16") ein Zapfen (18) zur Befestigung der Feder-Dämpfer-Einheit (21) angeordnet ist, insbesondere der Achsstummel (17) und der Zapfen (18) in einem Bereich der freien Enden der Schenkel (16^{I}, 16^{II}) angeordnet sind.

15. Chassis nach einem der Ansprüche 11 bis 14, **dadurch gekennzeichnet, dass** zwischen den Stirnwänden (12, 14) und den Seitenwänden (13, 15) ein Akkumulator für die Energieversorgung der Elektromotoren (22) aufnehmbar ist.

## Claims

1. A chassis for a mobility aid (1), which can be used for at least two of the possible drive types: front-wheel drive, rear-wheel drive or mid-wheel drive, consisting of at least two side walls (13, 15) and at least one connecting element (12, 14) connecting the two side walls (13, 15), having the following features:
a) each side wall (13, 15) comprises multiple positioning aids,
b) a bracket (16) which is connectable to each respective side wall (13, 15) in at least two different arrangements,
c) a drive unit (20) which is connected to the bracket (16), wherein
d) the arrangement of the bracket (16) on the side wall (13, 15) determines the type of drive of the mobility aid (1).

2. The chassis as claimed in claim 1, **characterized in that** a stub shaft (17) is fastened to the bracket (16) for receiving the drive unit (20), in particular the stub shaft (17) is arranged horizontally from the chassis (10).

3. The chassis as claimed in claim 1, **characterized in that** the brackets (16) are arranged symmetrically on the chassis (10).

4. The chassis as claimed in claim 1, **characterized in that** the positioning aids can be holes (15.1, 15.2, 15.3, 15.16; 15.4, 15.5, 15.6, 15.17; 15.7, 15.8, 15.9; 15.10, 15.11, 15.12) for fastening screws or rivets, or elevations or indentations or rails.

5. The chassis as claimed in claim 1, **characterized in that** the bracket (16) is connected to the side wall (13, 15) by screw-connecting or riveting or bonding or welding.

6. The chassis as claimed in one of the preceding claims, **characterized in that** the chassis comprises at least one base (11).

7. The chassis as claimed in one of the preceding claims, **characterized in that** each bracket (16) is connectable to the side wall (13, 15) in at least three different arrangements.

8. A chassis for an electric wheelchair (1), which can be used for at least two of the possible drive types: front-wheel drive, rear-wheel drive or mid-wheel drive, consisting of at least two side walls (13, 15) and two end walls (12, 14), having the following features:
a) each side wall (13, 15) comprises a hole pattern which consists of a plurality of bores (15.1, 15.2, 15.3, 15.16; 15.4, 15.5, 15.6, 15.17; 15.7, 15.8, 15.9; 15.10, 15.11, 15.12),
b) a bracket (16) provided with a stub shaft (17) is connectable to each respective side wall (13, 15) in at least two different arrangements, wherein
c) the arrangement of the brackets (16) on the side wall (13, 15) determines the type of drive of the wheelchair (1).

9. The chassis as claimed in claim 8, **characterized in that** the chassis comprises at least one base (11).

10. The chassis as claimed in claim 8 or 9, **characterized in that** each bracket (16) is connectable to the side wall (13, 15) in at least three different arrangements.

11. The chassis as claimed in one of claims 8 to 10, **characterized in that** the stub shaft (17) is realized for receiving a drive unit (20) consisting of at least one drive wheel (2) and one electric motor (22) driving the drive wheel (2).

12. The chassis as claimed in claim 11, **characterized in that** the drive unit (20) is pivotably mountable on the bracket (16) by means of a spring-damper unit (21).

13. The chassis as claimed in one of claims 8 to 12, **characterized in that** the bracket (16) is realized in an L-shaped manner with a short (16') and a long leg (16").

14. The chassis as claimed in claim 13, **characterized in that** the stub shaft (17) is arranged on the short leg (16') and/or a journal (18) for fastening the spring-damper unit (21) is arranged on the long leg (16"), in particular the stub shaft (17) and the journal (18) are arranged in a region of the free ends of the legs (16', 16").

15. The chassis as claimed in one of claims 11 to 14, **characterized in that** a battery pack for supplying power to the electric motors (22) is receivable between the end walls (12, 14) and the side walls (13, 15).

## Revendications

1. Châssis pour un dispositif d'aide à la mobilité (1), utilisable pour au moins deux des modes d'entraînement possibles que sont la traction avant, la traction arrière ou la traction centrale, constitué d'au moins deux parois latérales (13, 15) et d'au moins un élément de liaison (12, 14) des deux parois latérales (13, 15), présentant les caractéristiques suivantes :
a) chaque paroi latérale (13, 15) présente plusieurs moyens d'aide au positionnement,
b) comprenant un arceau respectif (16) qui peut être relié à une paroi latérale (13, 15) respective selon au moins deux dispositions différentes,
c) comprenant une unité d'entraînement (20) qui est reliée à l'arceau (16),
d) la disposition des arceaux (16) sur la paroi latérale (13, 15) déterminant le mode d'entraînement du dispositif d'aide à la mobilité (1).

2. Châssis selon la revendication 1, **caractérisé en ce qu'**une fusée d'essieu (17) est fixée à l'arceau (16) pour recevoir l'unité d'entraînement (20), en particulier la fusée d'essieu (17) étant disposée horizontalement depuis le châssis (10).

3. Châssis selon la revendication 1, **caractérisé en ce que** les arceaux (16) sont disposés symétriquement sur le châssis (10).

4. Châssis selon la revendication 1, **caractérisé en ce que** les moyens d'aide au positionnement peuvent être des trous (15.1, 15.2, 15.3, 15.16 ; 15.4, 15.5, 15.6, 15.17 ; 15.7, 15.8, 15.9 ; 15.10, 15.11, 15.12) pour des vis de fixation ou des rivets, ou des bossages ou des cavités ou des rails.

5. Châssis selon la revendication 1, **caractérisé en ce que** l'arceau (16) est relié à la paroi latérale (13, 15) par des vis ou des rivets ou par collage ou par soudage.

6. Châssis selon l'une des revendications précédentes, **caractérisé en ce que** le châssis comporte au moins un fond (11).

7. Châssis selon l'une des revendications précédentes, **caractérisé en ce que** chaque arceau (16) peut être relié à la paroi latérale (13, 15) selon au moins trois dispositions différentes.

8. Châssis pour un fauteuil roulant électrique (1), utilisable pour au moins deux des modes d'entraînement possibles que sont la traction avant, la traction arrière ou la traction centrale, constitué d'au moins deux parois latérales (13, 15) et de deux parois frontales (12, 14), présentant les caractéristiques suivantes :
a) chaque paroi latérale (13, 15) présente un schéma de trous constitué d'une pluralité de perçages (15.1, 15.2, 15.3, 15.16 ; 15.4, 15.5, 15.6, 15.17 ; 15.7, 15.8, 15.9 ; 15.10, 15.11, 15.12),
b) un arceau (16) respectif muni d'une fusée d'essieu (17) peut être relié à une paroi latérale (13, 15) respective selon au moins deux dispositions différentes,
c) la disposition des arceaux (16) sur la paroi latérale (13, 15) déterminant le mode d'entraînement du fauteuil roulant (1).

9. Châssis selon la revendication 8, **caractérisé en ce que** le châssis comporte au moins un fond (11).

10. Châssis selon la revendication 8 ou 9, **caractérisé en ce que** chaque arceau (16) peut être relié à la paroi latérale (13, 15) selon au moins trois dispositions différentes.

11. Châssis selon l'une des revendications 8 à 10, **caractérisé en ce que** la fusée d'essieu (17) est réalisée pour recevoir une unité d'entraînement (20) constituée d'au moins une roue motrice (2) et d'un moteur électrique (22) entraînant la roue motrice (2).

12. Châssis selon la revendication 11, **caractérisé en ce que** l'unité d'entraînement (20) peut être articulée sur l'arceau (16) par l'intermédiaire d'une unité ressort-amortisseur (21).

13. Châssis selon l'une des revendications 8 à 12, **caractérisé en ce que** l'arceau (16) est réalisé en forme de L avec une branche courte (16') et une branche longue (16").

14. Châssis selon la revendication 13, **caractérisé en ce que** la fusée d'essieu (17) est disposée sur la branche courte (16'), et/ou un tourillon (18) est disposée sur la branche longue (16") pour fixer l'unité ressort-amortisseur (21), en particulier la fusée d'essieu (17) et le tourillon (18) étant disposés dans une zone des extrémités libres des branches (16', 16").

15. Châssis selon l'une des revendications 11 à 14, **caractérisé en ce qu'**un accumulateur pour l'alimentation en énergie des moteurs électriques (22) peut être logé entre les parois frontales (12, 14) et les parois latérales (13, 15).
